# EUROPEAN PATENT SPECIFICATION

(11) **EP 4 516 676 B1**
(45) Date of publication and mention of the grant of the patent: **05.08.2026**
(21) Application number: 24183303.7
(22) Date of filing: 20.06.2024
(51) Int. Cl.: B64D 17/38, A62B 35/00

(54) **MULTI-RING RELEASE LOAD REDUCTION METHOD AND APPARATUS**
VERFAHREN UND VORRICHTUNG ZUR LASTVERRINGERUNG DURCH MEHRRINGFREISETZUNG
PROCÉDÉ ET APPAREIL DE RÉDUCTION DE CHARGE DE LIBÉRATION MULTI-ANNEAUX

(30) Priority: 28.08.2023 US 202363534927 P; 10.06.2024 US 202418739162
(43) Date of publication of application: 05.03.2025
(73) Proprietor: The Boeing Company, Arlington, VA 22202 (US)
(72) Inventor: Bowen, Ty Philip, Arlington, 22202 (US)
(74) Representative: Witte, Weller & Partner Patentanwälte mbB

(56) References cited:
- FR-B1- 2 772 339
- US-A- 4 923 150
- US-A1- 2011 024 570

## Description

### Field

The present application relates to a safety device allowing the detachable connection between a release mechanism type and a harness, and in particular to a multi-ring release load reduction method and apparatus.

### Background

In certain situations, the main parachute restraint system has shown undesirable wear. Ideally, there should be very little to no damage after restraint system release and main parachute pack lift. The high strength fabric panel and/or stitching between two upper vertical restraints can potentially experience some tearing after the restraint system is released and during main parachute pack lift. Ideally, the reverse multi-ring mechanisms is intended to completely disengage after release pins are pulled to allow the pilot chute to lift main parachute packs for main parachute deployment. A delay in the disengagement of the reverse multi-ring mechanism can lead to higher loads that may cause restraint system damage. The multi-ring release mechanism was originally designed to hold high static loads which are then released. In some instances, the multi-ring release mechanism can be released first, followed by a rapidly increasing dynamic load application and expected to function nominally.

Accordingly, an improved approach to ring release is needed.

Document US 2011/0024570 A1, according to its abstract, states "DEVICE FOR LOCATION OF MAIN CANOPY FROM A PARACHUTE", which is indicated by reference (DLC) and consists of a circuitry, which is essentially defined by a switch formed by positive and negative contacts, said switch is connected between a battery and a GPS module, including a reception antenna through which it received the positioning signals of orbit satellites: said switch is simultaneously connected to a transmitter module of radio frequency receiving location coordinates sent by the GPS module and transmitting through a transmitting antenna; circuitry is housed in a covering or body produced in plastic material or other appropriate material, which has an opening, though which it is inserted the end of a flexible stem produced in isolating material, and has as a function to maintain away the electric contacts and so that the circuitry is usually inoperative; flexible cable includes a slightly sharp end, which allows the separation of electric contacts and at the time of its introduction between said contacts; flexible cable also includes a periphery shoulder assuring an optimal condition of immobilization of said flexible cable in relation to electric contacts.

### Summary

According to a first aspect, a ring release system for a parachute restraint system is defined in claim 1.

The ring release system can include one or more additional features as defined in the dependent claims.

According to a second aspect, a method of disengaging a ring release system for a parachute restraint system is defined in claim 5. The method can include one or more additional features as defined in the dependent claims.

According to a third aspect, a ring release system for a parachute restraint system is defined in claim 6. The ring release system can include one or more additional features as defined in the dependent claims.

According to a fourth aspect, a method of disengaging a ring release system for a parachute restraint system is defined in claim 10. The method can include one or more additional features as defined in the dependent claims.

According to a fifth aspect, a ring release system for a parachute restraint system is defined in claim 14.

According to a sixth aspect, a parachute restraint system is defined in claim 15.

### Brief Description of the Drawings

The accompanying drawings, which are incorporated in and constitute a part of this specification, illustrate embodiments of the present teachings and together with the description, serve to explain the principles of the disclosure.
FIG. 1 shows a conventional multi-ring mechanism in a typical skydiving configuration and that is typically used in sport and military skydiving systems, drogue releases, cargo, etc., where the release pin/cable is on the side opposite the rings of the mechanism. This conventional multi-ring mechanism is not susceptible to loop lock up.
FIG. 2 shows a conventional reverse multi-ring mechanism that can be used on a main parachute pack restraint system where the release pin/cable is on the same side of the mechanism as the rings with a grommet strap. This reverse multi-ring mechanism is susceptible to loop lock up.
FIG. 3 shows a conventional reverse multi-ring mechanism like that in FIG. 2 in a released state. The reverse multi-ring mechanism is considered released once the pin is pulled free from the closure loop. A released reverse multi-ring mechanism is now able to disengage if sufficient force is present to cause the rings to tumble. Additional force is required for disengagement if loop lock up occurs after release.
FIG. 4 shows the reverse multi-ring mechanism of FIG. 3 in a disengaged state. The reverse multi-ring mechanism is considered disengaged once the first and second rings have tumbled free of the base D-ring of the assembly. Disengaged reverse multi-ring mechanism allows the horizontal restraints to move separately and allows the main parachute pack to be deployed from the vehicle.
FIG. 5A, FIG. 5B, FIG. 5C, FIG. 5D, FIG. 5E, and FIG. 5F show a conventional multi-ring mechanism disengagement sequence.
FIG. 6A, FIG. 6B, FIG. 6C, and FIG. 6D show a conventional reverse multi-ring mechanism experiencing a loop lock up condition during the release and disengagement process.
FIG. 7 shows a first multi-ring mechanism according to examples of the present disclosure.
FIG. 8A, FIG. 8B, FIG. 8C, FIG. 8D, and FIG. 8E show the activation operations of the first multi-ring mechanism of FIG. 7.
FIG. 9 shows a second multi-ring mechanism according to examples of the present disclosure.
FIG. 10 shows a close-up of FIG. 9.
FIG. 11A, FIG. 11B, FIG. 11C, FIG. 11D, FIG. 11E, and FIG. 11F show the activation operations of the second multi-ring mechanism of FIG. 9.
FIG. 12 shows a third multi-ring mechanism that combines elements of the first 3-ring mechanism of FIG. 7 and the second multi-ring mechanism of FIG. 9.

### Detailed Description

Reference will now be made in detail to the present embodiments, examples of which are illustrated in the accompanying drawings. Wherever possible, the same reference numbers will be used throughout the drawings to refer to the same or like parts.

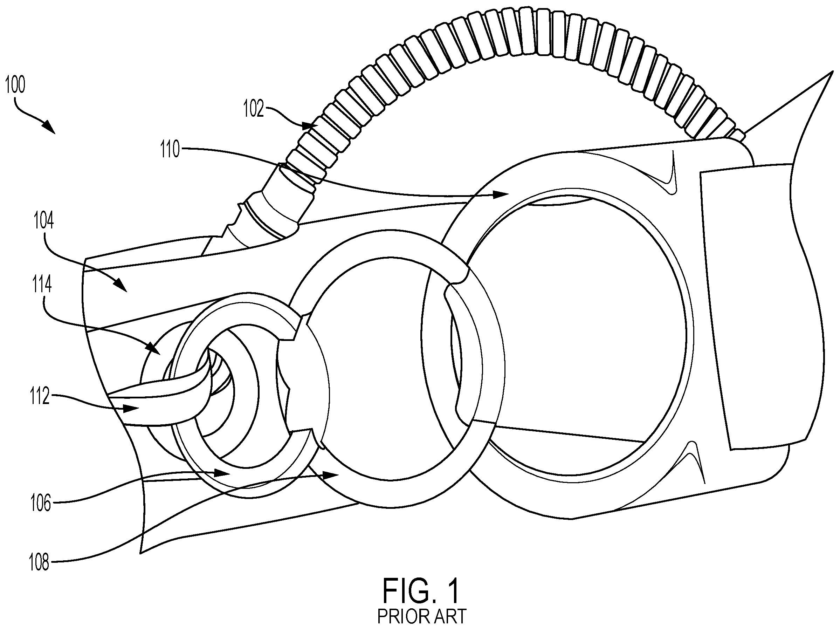

The slow reaction of multi-ring release mechanism to sudden and rapidly increasing applied loads due to pilot parachute lifting the main parachute pack out of bucket before the rings begin to move/disengage may causes the base D-ring to bend and the fabric panel and/or stitching to tear. FIG. 1 shows a conventional multi-ring mechanism 100 in a typical skydiving configuration and that is typically used in sport and military skydiving systems, drogue releases, cargo, etc., where the release pin/cable is on the side opposite the rings of the mechanism. This conventional multi-ring mechanism is not susceptible to loop lock up. As shown in FIG. 1, release cable contained within housing 102 is arranged behind webbing 104 and first ring 106, second ring 108, and third ring 110. In the engaged or locked position, release cable contained within housing 102 is engaged with and threaded through closure loop 112 through webbing 104 at grommet 114 through first ring 106.

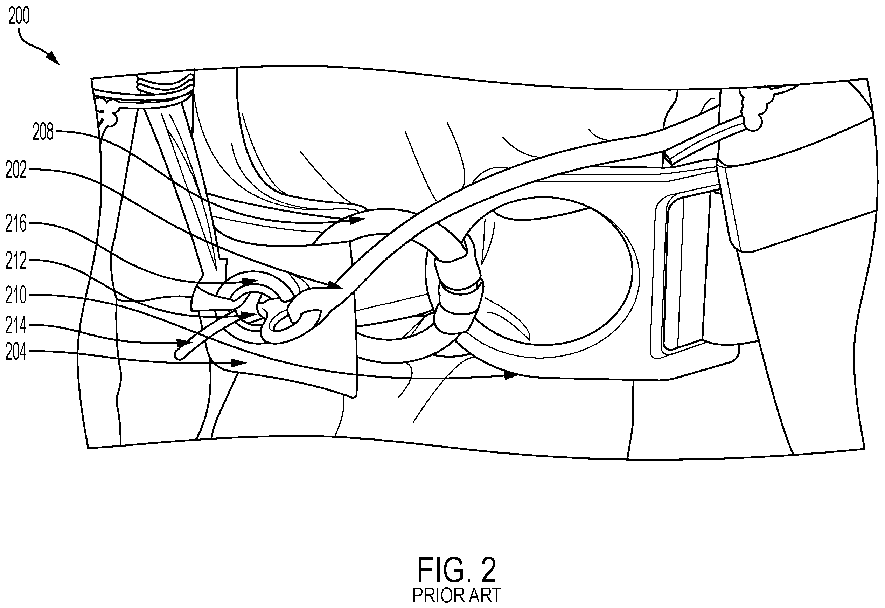

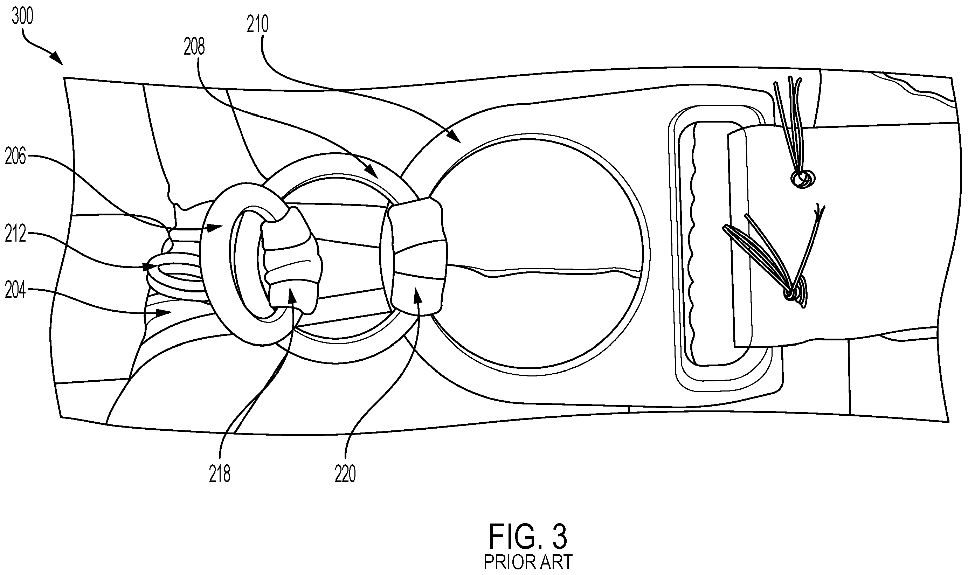

FIG. 2 shows a reverse multi-ring mechanism that can be used on a main parachute pack restraint system where the release pin/cable is on the same side of the mechanism as the rings with a grommet strap. This reverse multi-ring mechanism is susceptible to loop lock up. As shown in FIG. 2, release lanyard 202 and release pin 214 are arranged on the same side as webbing 204 and first ring (not shown located behind webbing 204, but shown in FIG. 3 as 206), second ring 208, and third ring 210. In the engaged or locked position, release pin 214, which is connected to release lanyard 202, is engaged with and threaded through closure loop 212 through webbing 204 at grommet 216 through first ring (not shown located behind webbing 204, but shown in FIG. 3 as 206). First webbing attachment portion can be a first becket 218, second webbing attachment portion can be a second becket 220, and third webbing attachment portion can be a third becket 222.

FIG. 3 shows a reverse multi-ring mechanism like that in FIG. 2 in a released state 300. The reverse multi-ring mechanism is considered released once the release pin/cable is pulled free from the closure loop. A released reverse multi-ring mechanism is now able to disengage if sufficient force is present to cause the rings to tumble. Additional force is required for disengagement if loop lock up occurs after release. As shown in FIG. 3, once release pin 214 is pulled free from closure loop 212, and closure loop 212 is free of grommet 216 and first ring 206, first ring 206 is free to tumble or rotate towards the opening of second ring 208.

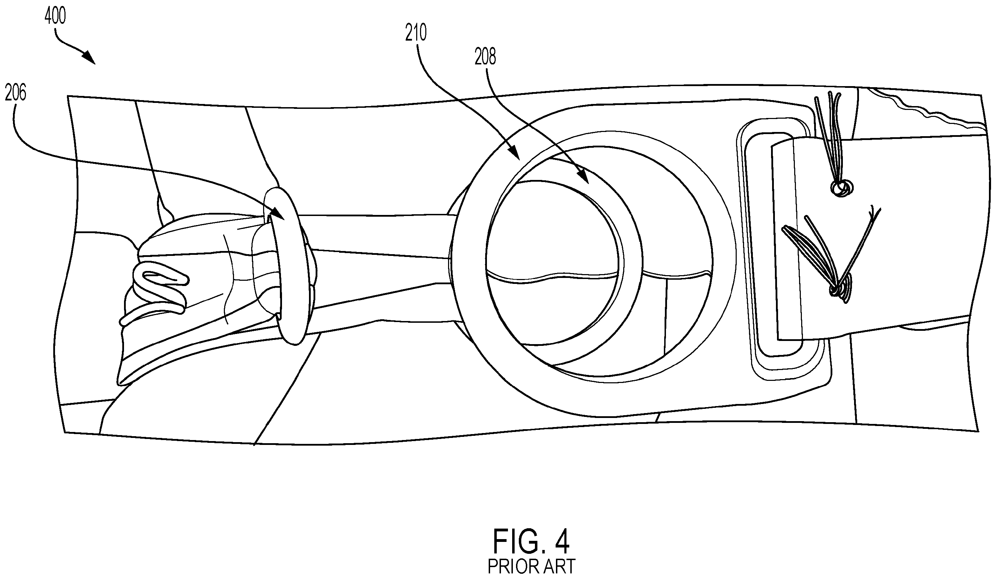

FIG. 4 shows the reverse multi-ring mechanism of FIG. 3 in a disengaged state 400. The reverse multi-ring mechanism is considered disengaged once the first and second rings have tumbled free of the base D-ring of the assembly. Disengaged reverse multi-ring mechanism allows the horizontal restraints to move separately and allows the main parachute pack to be deployed from the vehicle. As shown in FIG. 4, once first ring 206 passes through the opening of second ring 208, second ring 208 tumbles or rotates towards the opening of third ring 210.

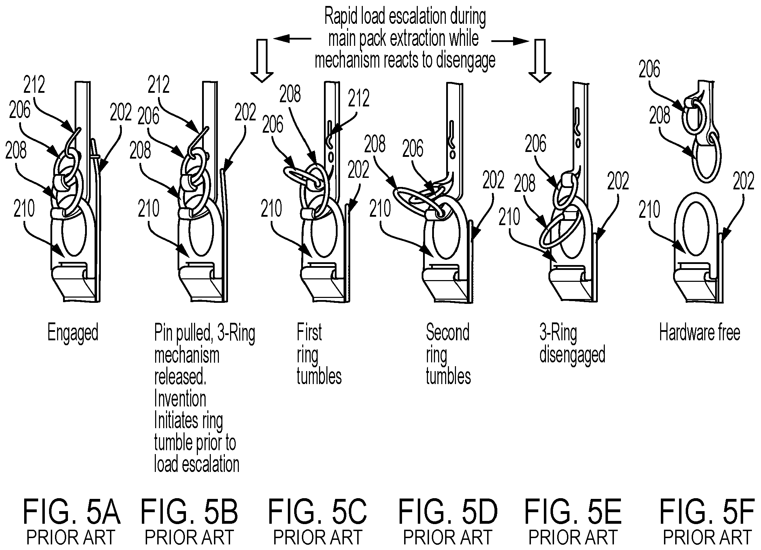

FIG. 5A, FIG. 5B, FIG. 5C, FIG. 5D, FIG. 5E, and FIG. 5F show a multi-ring mechanism disengagement sequence, where FIG. 5A shows first ring 206, second ring 208, and third ring 210 in an engaged arrangement with closure loop 212 and release cable 202 in place, FIG. 5B shows release cable 202 pulled and closure loop 212 still in place and first ring 206, second ring 208, and third ring 210 still engaged together, FIG. 5C shows closure loop 212 disengaged and first ring 206 beginning to tumble and rotate towards second ring 208, FIG. 5D shows second ring 208 beginning to tumble and rotate towards third ring 210, FIG. 5E shows second ring 208 continue to rotate towards third ring 210, and FIG. 5F shows a full disengagement of first ring 206 from second ring 208 and second ring 208 from third ring 210.

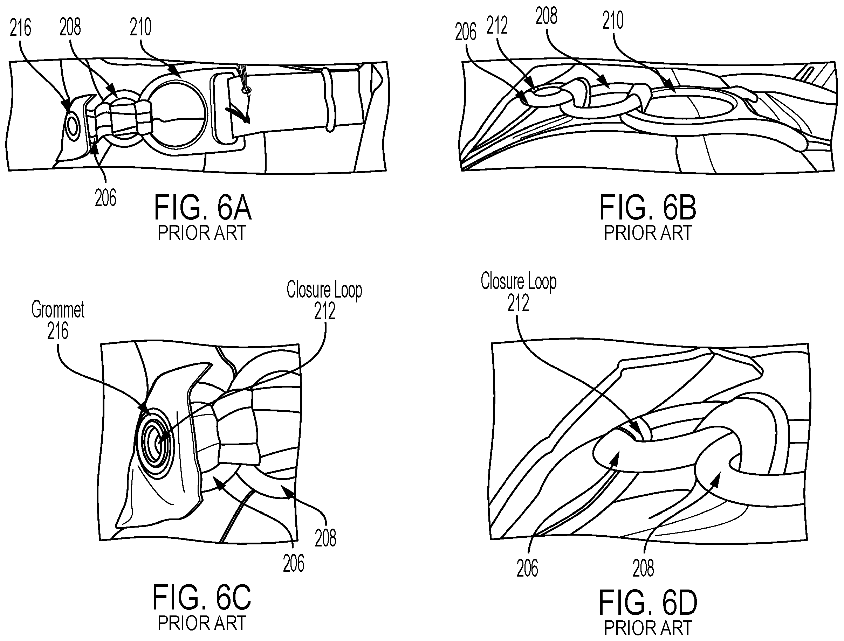

FIG. 6A, FIG. 6B, FIG. 6C, and FIG. 6D show a reverse multi-ring mechanism experiencing a loop lock up condition during the release and disengagement process, where FIG. 6A shows first ring 206, second ring 208, and third ring 210 are engaged with closure loop 212 (not shown) through grommet 216 and first ring 206, FIG. 6B shows side perspective view of FIG. 6A, FIG. 6C shows a close-up view of FIG. 6A with closure loop 212 shown inside grommet 216, and FIG. 6D shows a close-up view of FIG. 6B with closure loop 212 through grommet 216 and first ring 206 in a locked up condition.

Generally speaking, according to a first example of the present disclosure, an improvement in performance is provided by inducing the grommet of the multi-ring mechanisms to increase relative distance from the engaged position free of the closure loop that allows first ring to move freely to a disengaged position and disengage prior to the main parachute pack being lifted out of the vehicle. Examples of the present disclosure provides for lowering the loads experienced by the multi-ring mechanism, and thus mitigating hardware damage. A connection between a motion lanyard and the grommet physically displaces the grommet after a release pin is pulled, thereby mitigating potential loop lock up beginning the disengagement event prior to the main parachute pack motion. The connection is releasable in nature such that it separates after the function of displacing the grommet. In operation, the pilot parachute pulls the restraint lanyard which then pulls the release pins to release the reverse multi-ring mechanism. After the release pins are pulled, the grommet is physically displaced in such manner as to mitigate potential loop lock up beginning the disengagement event, and then separates from the grommet by releasable structure. In one non-limiting example, the grommet motion lanyard is fabricated from a cord that breaks under tensile load after its function has completed.

According to a second example of the present disclosure, an improvement in performance is provided by inducing the rings of the multi-ring mechanisms to tumble/rotate earlier and disengage prior to the main parachute pack being lifted out of the vehicle. Examples of the present disclosure provides for lowering the loads experienced by the multi-ring mechanism, and thus mitigating hardware damage. A connection between a ring/becket motion lanyard and a second and/or a third ring physically displaces the ring(s) after a release pin is pulled, thereby initiating the rings to tumble/rotate beginning the disengagement event prior to the main parachute pack motion. The connection is releasable in nature such that it separates after the function of displacing the ring(s). In operation, the pilot parachute pulls the restraint lanyard which then pulls the release pins to release the reverse multi-ring mechanism. After the release pins are pulled, the ring(s) are pulled in such manner as to induce tumble/rotation beginning the disengagement event, and then separates from the ring(s) by releasable structure. In one non-limiting example, the ring/becket motion lanyard is fabricated from a cord that breaks under tensile load after its function has completed.

According to a second example of the present disclosure, a ring/becket motion lanyard, which can be fabricated with 45.35 kg (100-lb) tensile strength nylon cord or other suitably strength cordage, functions in the sequence after the release pin is pulled free of the closure loop. The proper sequence of events is accomplished by a controlled length of the lanyard. The lanyard can be secured at one end to a ring/becket and at another end to the release pin. Additional lanyard can also be used that connect to other ring/beckets. In this example, the lanyard(s), when tension is applied, induces tumble/rotation of the ring(s) after the release pin is extracted by a connective member to the release pin or lanyard. The lanyard(s) can take a variety of structures, such as, but are not limited to, a single ply/length of material, a looped ply/length of material, a connected between the release pin and the ring/becket(s), connected between the release pin lanyard and the ring/becket(s), connected between the release pin lanyard and the ring/becket(s). The lanyard(s) have a sufficient length and/or /configuration to ensure sequenced operation only after the release pin has cleared free of the closure loop. The lanyard(s) can be configured to disengage after inducing tumble/rotation of the ring(s).

According to a third example of the present disclosure, a combination of the first and the second examples can be used to provide advantages provided by each example individually, and in particular are used in a plurality to induce motion in all ring/becket(s) of the release mechanism. The lanyard(s) are configured to be of sufficient length and/or configuration to ensure sequenced operation only after the release pin has cleared free of the closure loop and configured to disengage after inducing tumble/rotation of the ring(s).

Examples of the present disclosure provides for improvement in performance by reducing the forces experienced by the multi-ring mechanism hardware during the disengagement event prior to the main parachute pack extraction from the vehicle, not interfering with or prevent proper operation of the multi-ring mechanism, and not interfering with or prevent proper deployment of the parachute system while mitigating excessive loads experienced by the multi-ring mechanism hardware during disengagement.

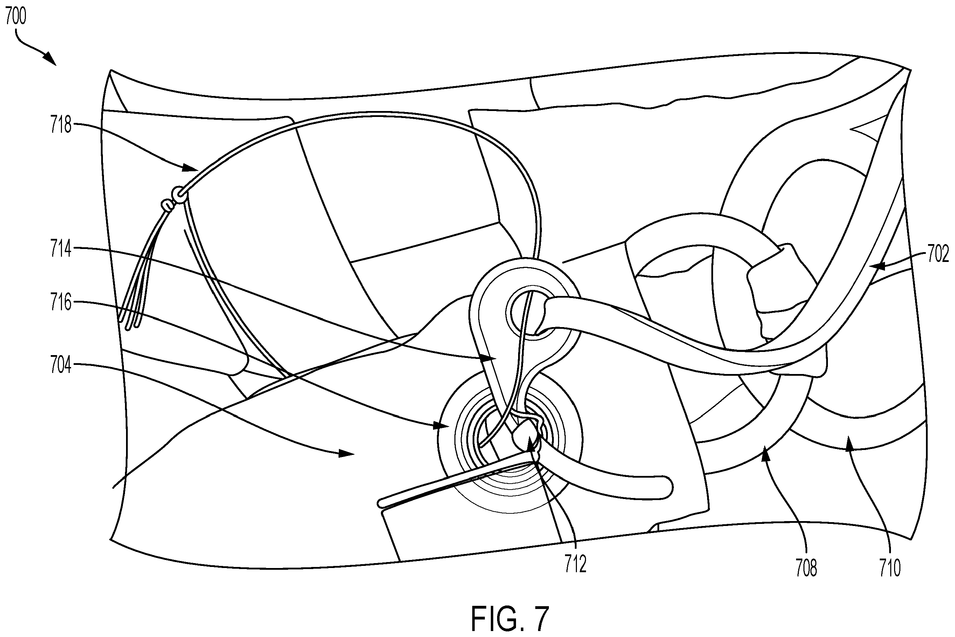

FIG. 7 shows a first reverse multi-ring mechanism 700 according to examples of the present disclosure. The present first reverse multi-ring mechanism mitigates potential loop lock up can be used on a main parachute pack restraint system where the release pin/cable is on the same side of the mechanism as the rings with a grommet strap. As shown in FIG. 7, release lanyard (also called release pin cord) 702 and release pin 714 is arranged on the same side as webbing 704 and first ring (not shown, but located behind webbing 704 and grommet 716, and similarly shown in FIG. 3 as 206), second ring 708, and third ring 710. In the engaged or locked position, release pin 714, which is connected to release lanyard 702, is engaged with and threaded through closure loop 712 through webbing 704 at grommet 716 and first ring (FIG. 3 as 206). Grommet motion lanyard 718 is arranged as a loop through grommet 716 and through the eye of release pin 714, such that as sufficient tension is applied to release lanyard 702, release pin 714 slides through closure loop 712 and engages motion lanyard 718. Grommet motion lanyard 718 is arranged to mitigate high loads by removing the loop lock up potential, which delays disengagement for increasingly higher loads. Grommet motion lanyard 718 then causes a force to be applied to that portion of webbing 704, such that grommet 716 is pulled away removing loop lock up potential and allowing first ring to be released. In the examples of FIG. 7, FIG. 9, and FIG. 12, first ring 706 is attached to first webbing attachment portion that can be a first becket 218, second ring 708 is attached to a second webbing attachment portion that can be a second becket 220, and third ring 710 is attached to third webbing attachment portion that can be a third becket 222.

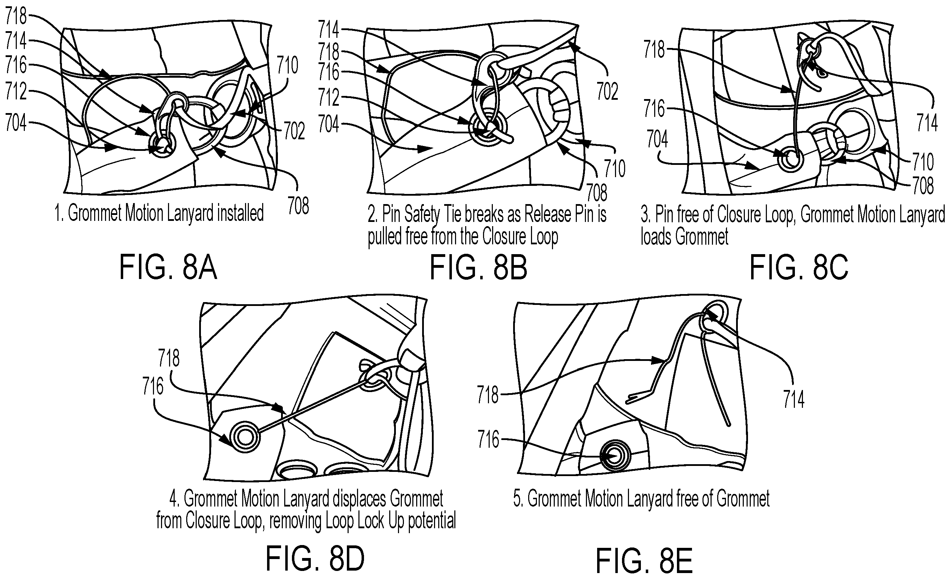

FIG. 8A, FIG. 8B, FIG. 8C, FIG. 8D, and FIG. 8E show the activation operations of the first reverse multi-ring mechanism of FIG. 7. FIG. 8A shows an engaged reverse multi-ring arrangement as shown in FIG. 7. FIG. 8B shows the arrangement where sufficient tension is applied to release lanyard 702, activating release pin 714 to slide through and clearing closure loop 712 and causing grommet motion lanyard 718 to extend to length between release pin 714 and grommet 716. FIG. 8C shows release pin 714 moving further away from the engaged position, providing further tension to grommet motion lanyard 718, and causing grommet 716 to move further away to increase relative distance from the engaged position and closure loop 712 that allows first ring to move freely to a disengaged position that mitigates potential loop lock up. FIG. 8D shows the arrangement where further tension is applied to grommet motion lanyard 718 causing grommet 716 to move further away from the engaged position and closure loop 712, which allows first ring to move freely to a disengaged position that mitigates potential loop lock up. FIG. 8E shows the arrangement where further tension is applied to grommet motion lanyard 718 causing grommet motion lanyard 718 to break.

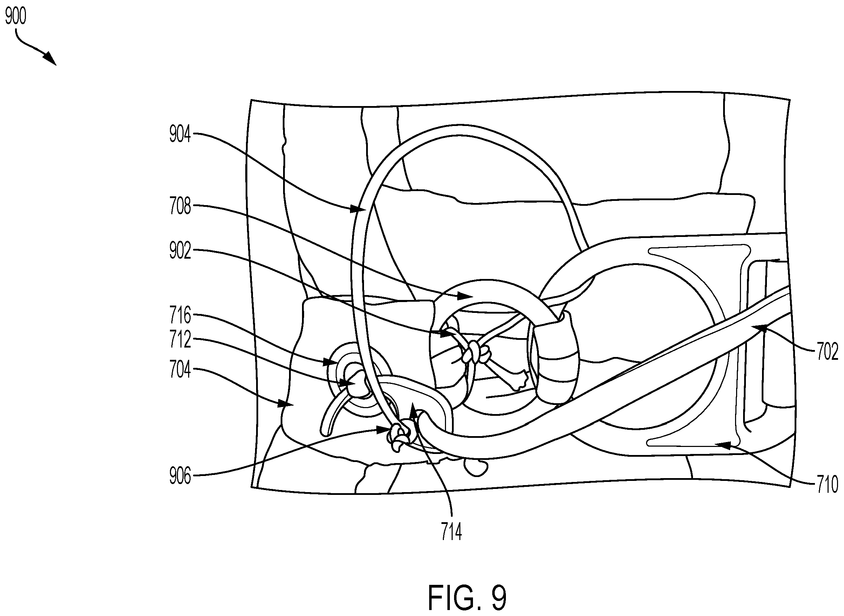

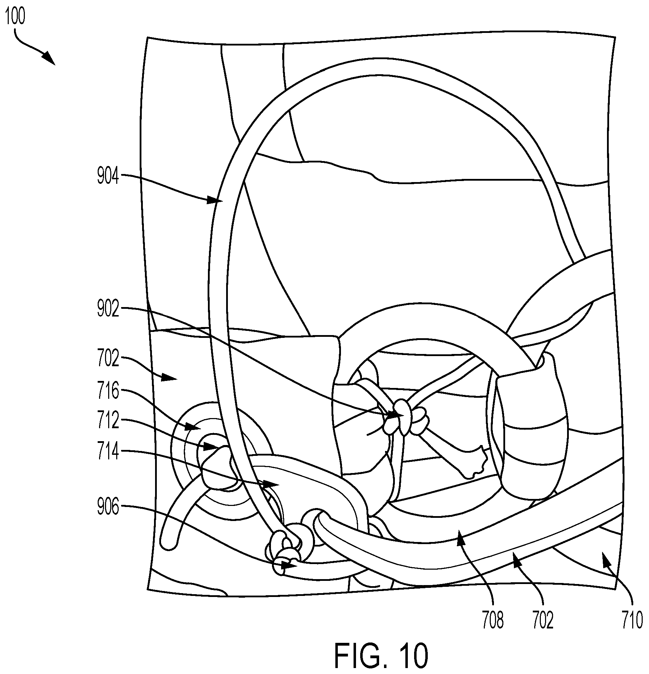

FIG. 9 shows a second multi-ring mechanism 900 according to examples of the present disclosure. FIG. 10 shows a close-up of FIG. 9. The present second reverse multi-ring mechanism allows earlier disengagement of a standard or reverse multi-ring mechanism when used sufficient force is applied on the release mechanism, such as on a main parachute pack restraint system where the release pin/cable is on the same side of the mechanism as the rings with a grommet strap. As shown in FIG. 9, release lanyard 702 and release pin 714 is arranged on the same side as webbing 704 and first ring (not shown, but located behind webbing 704 and grommet 716, and similarly shown in FIG. 3 as 206), second ring 708, and third ring 710. In the engaged or locked position, release pin 714, which is connected to release lanyard 702, is engaged with and threaded through closure loop 712 through webbing 704 at grommet 716 and through first ring (FIG. 3 as 206). Ring/Becket motion lanyard 904 is connected to first ring (FIG. 3 as 206) and/or webbing becket (FIG. 3 as 218) at a first end 902 of ring/becket motion lanyard 904 and connected to an end of release lanyard 702 and/or release pin 714 at a second end 906 of ring/becket motion lanyard 904. Ring/becket motion lanyard 904 is arranged to mitigate high loads by inducing the rings to tumble/disengage earlier in the deployment process before the system experiences higher loads. The load increases during the release time frame of deployment. In one non-limiting example as shown, first end of ring/becket motion lanyard 904 is arranged to go through the hole and under second ring 708, over and then through the hole, and then under third ring 710 to connect with release cable 702 at second end 906. However, the routing of ring/becket motion lanyard 904 may be made in many different ways so long as the function of applying a load to the ring/becket to initiate motion is achieved. In operation, when sufficient tension is applied to release lanyard 702, release pin 714 slides through and clear of closure loop 712 and engages ring/becket motion lanyard 904. Ring/becket motion lanyard 904 then causes a force to be applied to first ring (FIG. 3 as 206) and/or webbing becket (FIG. 3 as 218) that initiates first ring and/or webbing becket to tumble/disengage.

In some examples, some of the webbings can be attached together by stitching. First ring 706 can be connected to a first webbing. Second ring 708 can be connected to a second webbing, which is sewn on top of the first webbing. The grommet can be installed in a third webbing which is sewn on top of the second and the first webbing. Third ring 710 can be connected to a fourth webbing only. When the multi-ring mechanism is released, first ring 706 and second ring 708, along with the first, the second, and the third webbing with the grommet disengages from third ring 710 and the fourth webbing. In some examples, the multi-ring arrangement can be built using only two pieces of webbing in total where first ring 706 and second ring 708 and the grommet with the first webbing disengages from third ring 710 and the second webbing.

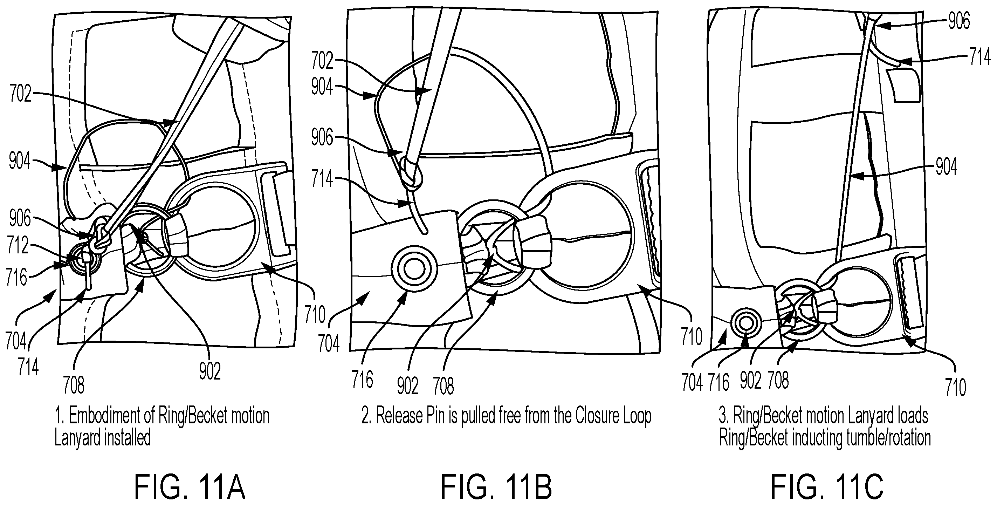

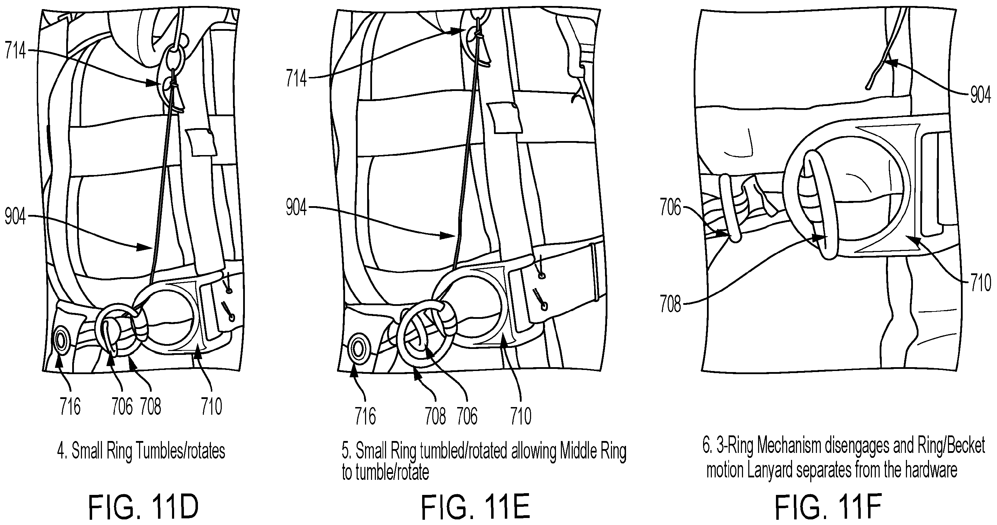

FIG. 11A, FIG. 11B, FIG. 11C, FIG. 11D, FIG. 11E, and FIG. 11F show the activation operations of the second multi-ring mechanism of FIG. 9. FIG. 11A shows an engaged reverse multi-ring arrangement as shown in FIG. 9. FIG. 11B shows the arrangement where sufficient tension is applied to release lanyard 702, activating release pin 714 to slide through and clearing closure loop 712. FIG. 11C shows release pin 714 moving further away from the engaged position, providing tension to ring/becket motion lanyard 904. FIG. 11D shows the arrangement where further tension is applied to ring/becket motion lanyard 904, which causes first ring 706 to move freely to a disengaged position by tumbling or rotating toward second ring 708. FIG. 11E shows the arrangement where further tension is applied to ring/becket motion lanyard 904, which allows second ring 708 to move freely to a disengaged position by tumbling or rotating toward third ring 710. FIG. 11F shows the arrangement where further tension is applied to ring/becket lanyard 904 causing ring/becket motion lanyard 904 to break.

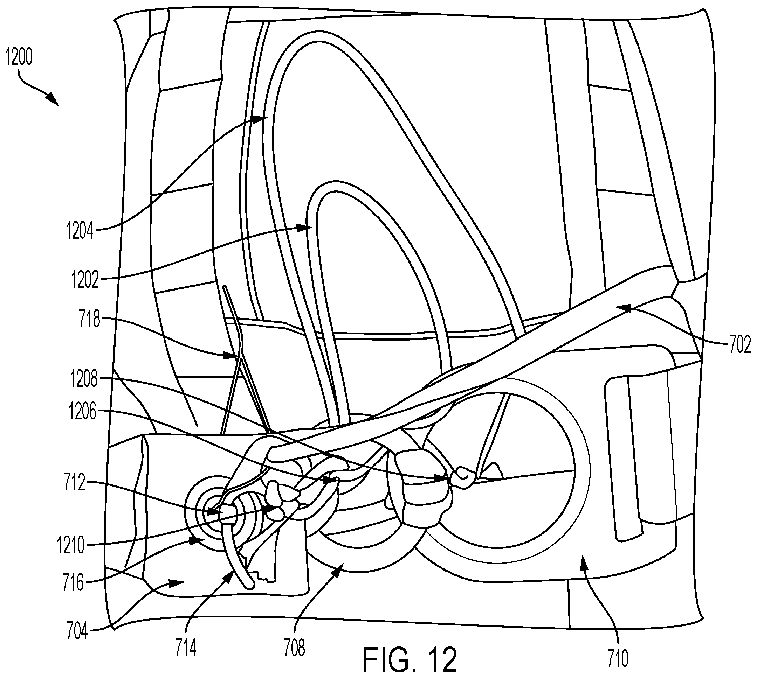

FIG. 12 shows a third multi-ring mechanism 1200 that combines elements of the first multi-ring mechanism (i.e. Grommet Motion Lanyard) of FIG. 7 and the second multi-ring mechanism (i.e. Ring/Becket Motion Lanyard)of FIG. 9, with the addition of a second ring/becket motion lanyard 1204 that is connected to the second ring 708 and/or second webbing becket (FIG. 3 as 220) to induce, cause earlier release of second ring 708. The present third multi-ring reverse multi-ring mechanism mitigates potential loop lock up and allows earlier disengagement of the multi-ring mechanism when used sufficient force is applied on the release mechanism, such as on a main parachute pack restraint system where the release pin/cable is on the same side of the mechanism as the rings with a grommet strap. As shown in FIG. 12, release lanyard 702 is arranged on the same side as webbing 704 and first ring (not shown, but located behind webbing 704 and grommet 716, and similarly shown in FIG. 3 as 206), second ring 708, and third ring 710. In the engaged or locked position, release pin 714, which is connected to release lanyard 702, is engaged with and threaded through closure loop 712 through webbing 704 at grommet 716 and through first ring (FIG. 3 as 206). Motion lanyard 718 is arranged as a loop through grommet 716 and through the eye of release pin 714, such that as sufficient tension is applied to release lanyard 702, release pin 714 slides through and clear of closure loop 712 and engages motion lanyard 718. Motion lanyard 718 then causes a force to be applied to that portion of webbing 704, such that grommet 716 is pulled away removing loop lock up potential and allowing first ring to be released. First ring/becket motion lanyard 1202 is connected to first ring (FIG. 3 as 206) and/or first webbing becket (FIG. 3 as 218) at a first end 902 of first ring/becket motion lanyard 1202 and connected to an end of release lanyard 702 and/or release pin 714 at a second end 906 of first ring/becket motion lanyard 1202. In one non-limiting example as shown, first end of first ring/becket motion lanyard 1202 is arranged to go through the hole and under second ring 708, over and then through the hole, and then under third ring 710 to connect with release cable 702 at second end 1210. Second ring/becket motion lanyard 1204 is connected to second ring 708 and/or webbing becket (FIG. 3 as 220) at a first end 1208 of second ring/becket motion lanyard 1204 and connected to an end of release lanyard 702 and/or release pin 714 at a second end 1210 of second ring/becket motion lanyard 1204. In one non-limiting example as shown, first end of second ring/becket motion lanyard 1204 is arranged to go through the hole and under third ring 710, over and then through the hole, and then under third ring 710 to connect with release cable 702 at second end 1210. However, the routing of first ring/becket motion lanyard 1202 and second ring/becket motion lanyard 1204 may be made in many different ways so long as the function of applying a load to the ring/becket to initiate motion is achieved. Because second ring/becket motion lanyard 1204 is intended to allow later in sequence release of second ring 708, the length of second ring/becket motion lanyard 1204 is longer than the length of first ring/becket motion lanyard 1202. In operation, when sufficient tension is applied to release lanyard 702, release pin 714 slides through and clear of closure loop 712 and engages grommet motion lanyard 718, then engages first ring/becket motion lanyard 1202, then engages second ring/becket motion lanyard 1204. In sequence, grommet motion lanyard 718 displaces grommet 716 from closure loop 712 and first ring (FIG. 3 as 206) removing loop lock up potential, then first ring/becket motion lanyard 1202 causes a force to be applied to first ring (FIG. 3 as 206) and/or webbing becket (FIG. 3 as 218) to induce tumble/disengagement, then second ring/becket motion lanyard 1204 causes a force to be applied to second ring 708 and/or webbing becket (FIG. 3 as 220) to induce tumble/disengagement.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. Moreover, the order in which the elements of the methods are illustrated and described may be re-arranged, and/or two or more elements may occur simultaneously. The embodiments were chosen and described in order to best explain the principles of the invention and its practical applications, to thereby enable others skilled in the art to best utilize the invention and various embodiments with various modifications as are suited to the particular use contemplated.

Notwithstanding that the numerical ranges and parameters setting forth the broad scope of the embodiments are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. For example, a range of "less than 10" can include any and all sub-ranges between (and including) the minimum value of zero and the maximum value of 10, that is, any and all sub-ranges having a minimum value of equal to or greater than zero and a maximum value of equal to or less than 10, e.g., 1 to 5. In certain cases, the numerical values as stated for the parameter can take on negative values. In this case, the example value of range stated as "less than 10" can assume negative values, e.g. -1, -2, -3, -10, -20, -30, etc.

The following embodiments are described for illustrative purposes only with reference to the Figures. Those of skill in the art will appreciate that the following description is exemplary in nature, and that various modifications to the parameters set forth herein could be made without departing from the scope of the present embodiments, which scope is defined by the claims. It is intended that the specification and examples be considered as examples only. The various embodiments are not necessarily mutually exclusive, as some embodiments can be combined with one or more other embodiments to form new embodiments.

While the embodiments have been illustrated respect to one or more implementations, alterations and/or modifications can be made to the illustrated examples. The scope is defined by the appended claims. In addition, while a particular feature of the embodiments may have been disclosed with respect to only one of several implementations, such feature may be combined with one or more other features of the other implementations as may be desired and advantageous for any given or particular function.

Furthermore, to the extent that the terms "including", "includes", "having", "has", "with", or variants thereof are used in either the detailed description and the claims, such terms are intended to be inclusive in a manner similar to the term "comprising." As used herein, the phrase "one or more of", for example, A, B, and C means any of the following: either A, B, or C alone; or combinations of two, such as A and B, B and C, and A and C; or combinations of A, B and C.

Other embodiments will be apparent to those skilled in the art from consideration of the specification and practice of the descriptions disclosed herein. It is intended that the specification and examples be considered as exemplary only, with the scope being indicated by the following claims.

## Claims

1. A ring release system (700) for a parachute restraint system, comprising:
a first webbing (704);
a second webbing;
a closure loop (712);
a first ring (706) connected to the first webbing (704) at a first webbing attachment portion;
a second ring (708) connected to the first webbing (704) at a second webbing attachment portion;
a third ring (710) connected to the second webbing at a third webbing attachment portion;
a release pin (714) assembly comprising a release pin cord (702) and a release pin (714) that passes through the closure loop (712) that is arranged through a grommet (716) in the first webbing (704) that at least partially overlaps the first ring (706) and removably secures the release pin (714) in the grommet (716); and
**characterized by**
a grommet motion lanyard (718) arranged in a closed loop through the grommet (714) and engageable with the release pin (714) during tension of the release pin cord (702).

2. The ring release system (700) of claim 1, wherein the grommet motion lanyard (718) is arranged to cause a force to be applied to a portion of the first webbing (704) and/or the grommet (716) that causes the grommet (716) to be pulled away from the closure loop (712) and the first ring (706) during engagement with the release pin cord (702).

3. The ring release system (700) of claim 2, wherein the first ring (706) is released by displacement of the grommet (716) provided by the grommet motion lanyard (718).

4. The ring release system (700) of any of claims 1 to 3, wherein the first webbing attachment portion is a first becket (218), the second webbing attachment portion is a second becket (220), and the third webbing attachment portion is a third becket (222).

5. A method of disengaging a ring release system (700) for a parachute restraint system, the method comprising:
providing tension to a release pin cord (702) causing a release pin (714) that is attached to one end of the release pin cord (702) to slide out from a closure loop (712);
activating a grommet motion lanyard (718) that is arranged in a closed loop through a grommet (716) of a first webbing by engagement with the release pin (714);
moving the grommet (716) away from the closure loop (712) and a first ring (706) that is attached to the first webbing (704) at a first webbing attachment portion by action of the grommet motion lanyard (718);
releasing the first ring (706) by allowing the first ring (706) to rotate towards and disengage from a second ring (708); and
releasing the second ring (708) once the first ring (706) is disengaged and allowing the second ring (708) to rotate towards and disengage from a third ring (710), wherein the third ring (710) is arranged on a second webbing.

6. A ring release system (700, 900, 1200) for a parachute restraint system, comprising:
a first webbing (704);
a second webbing;
a closure loop (712);
a first ring (706) connected to the first webbing (704) at a first webbing attachment portion;
a second ring (708) connected to the first webbing (704) at a second webbing attachment portion;
a third ring (710) connected to the second webbing at a third webbing attachment portion;
a release pin assembly comprising a release pin cord (702) and a release pin (714) that passes through the closure loop (712) that is arranged through a grommet (716) in the first webbing (704) that at least partially overlaps the first ring (706) and removably secures the release pin (714) in the grommet (716); and
**characterized by**
a first ring and/or becket motion lanyard (904, 1202) connected to a first end of the release pin cord (702) and connected to the first webbing (704) between the first webbing attachment portion and the second webbing attachment portion and engageable with the release pin (714) during tension of the release pin cord (702).

7. The ring release system (700, 900, 1200) of claim 6, further comprising a second ring and/or becket motion lanyard (1204) connected to the first end of the release pin cord (702) and connected to the first webbing (704) near the second webbing attachment portion and engageable with the release pin (714) during tension of the release pin cord (702).

8. The ring release system (700, 900, 1200) of claim 6 or 7, further comprising a grommet motion lanyard (718) arranged in a closed loop through the grommet (716) and engageable with the release pin (714) during tension of the release pin cord (702).

9. The ring release system (700, 900, 1200) of claim 8, wherein the second ring and/or becket motion lanyard (1204) is longer than the first ring and/or becket motion lanyard (904, 1202).

10. A method of disengaging a ring release system (700, 900, 1200) for a parachute restraint system, the method comprising:
providing tension to a release pin cord (702) causing a release pin (714) that is attached to one end of the release pin cord (702) to slide out from a closure loop (712);
activating a first ring and/or becket motion lanyard (904, 1202) that is connected to the release pin cord (702);
releasing a first ring (706) by allowing the first ring (706) to rotate towards and disengage from a second ring (708) by activation of the first ring and/or becket motion lanyard (904, 1202); and
releasing the second ring (708) once the first ring (706) is disengaged and allowing the second ring (708) to rotate towards and disengage from a third ring (710), wherein the third ring is arranged on a second webbing.

11. The method of claim 10, wherein after releasing the first ring (706), the method further comprises:
activating a second ring and/or becket motion lanyard (1204) that is connected to the release pin cord (702), wherein the second ring (708) is released by activation of the second ring and/or becket motion lanyard (1204).

12. The method of claim 10, wherein first ring and the second ring are arranged on a first webbing and the third ring is arranged on a second webbing.

13. The method of claim 5 or any of claims 10 to 12, wherein the first webbing and the second webbing are attached to a parachute restraint system.

14. A ring release system (700, 900, 1200) for a parachute restraint system, comprising:
a first webbing (704);
a second webbing;
a closure loop (712);
a first ring (706) connected to the first webbing (704) at a first webbing attachment portion;
a second ring (708) connected to the first webbing (704) at a second webbing attachment portion;
a third ring (710) connected to the second webbing at a third webbing attachment portion;
a release pin assembly comprising a release pin cord and a release pin that passes through the closure loop (712) that is arranged through a grommet (716) in the first webbing (704) that at least partially overlaps the first ring (706) and removably secures the release pin (714) in the grommet (716);
**characterized by**
a grommet motion lanyard arranged (718) in a closed loop through the grommet (716) and engageable with the release pin (714) during tension of the release pin cord (702);
a first ring and/or becket motion lanyard (904, 1202) connected to a first end of the release pin cord (702) and connected to the first webbing (704) between the first webbing attachment portion and the second webbing attachment portion and engageable with the release pin (714) during tension of the release pin cord (702); and
a second ring and/or becket motion lanyard (1204) connected to the first end of the release pin cord (702) and connected to the first webbing (704) near the second webbing attachment portion and engageable with the release pin (714) during tension of the release pin cord (702).

15. A parachute restraint system comprising a ring release system according to any of claims 1 to 4, 6 to 9 or claim 14, wherein the first webbing attachment portion, the second webbing attachment portion, and the third webbing attachment portion are attached to the parachute restraint system.

## Patentansprüche

1. Ringfreigabesystem (700) für ein Fallschirm-Rückhaltesystem, aufweisend:
ein erstes Gurtband (704);
ein zweites Gurtband;
eine Verschlussschlaufe (712);
einen ersten Ring (706), der mit dem ersten Gurtband (704) an einem ersten Gurtbandbefestigungsabschnitt verbunden ist;
einen zweiten Ring (708), der mit dem ersten Gurtband (704) an einem zweiten Gurtbandbefestigungsabschnitt verbunden ist;
einen dritten Ring (710), der mit dem zweiten Gurtband an einem dritten Gurtbandbefestigungsabschnitt verbunden ist;
eine Auslösestiftanordnung (714), aufweisend eine Auslösestiftschnur (702) und einen Auslösestift (714), der durch die Verschlussschlaufe (712) verläuft, die durch eine Öse (716) in dem ersten Gurtband (704) angeordnet ist, die den ersten Ring (706) zumindest teilweise überlappt und den Auslösestift (714) lösbar in der Öse (716) sichert; und
**gekennzeichnet durch**
eine Ösenbewegungsleine (718), die in einer geschlossenen Schleife durch die Öse (714) angeordnet ist und mit dem Auslösestift (714) während einer Spannung der Auslösestiftschnur (702) in Eingriff bringbar ist.

2. Ringfreigabesystem (700) nach Anspruch 1, wobei die Ösenbewegungsleine (718) so angeordnet ist, dass eine Kraft auf einen Abschnitt des ersten Gurtbandes (704) und/oder die Öse (716) ausgeübt wird, die bewirkt, dass die Öse (716) von der Verschlussschlaufe (712) und dem ersten Ring (706) während eines Eingriffs mit der Auslösestiftschnur (702) weggezogen wird.

3. Ringfreigabesystem (700) nach Anspruch 2, wobei der erste Ring (706) durch eine Verschiebung der Öse (716), bereitgestellt durch die Ösenbewegungsleine (718), freigegeben wird.

4. Ringfreigabesystem (700) nach einem der Ansprüche 1 bis 3, wobei der erste Gurtbandbefestigungsabschnitt eine erste Gurtbandschlaufe (218) ist, der zweite Gurtbandbefestigungsabschnitt eine zweite Gurtbandschlaufe (220) ist und der dritte Gurtbandbefestigungsabschnitt eine dritte Gurtbandschlaufe (222) ist.

5. Verfahren zum Lösen eines Ringfreigabesystems (700) für ein Fallschirm-Rückhaltesystem, wobei das Verfahren aufweist:
Aufbringen einer Spannung auf eine Auslösestiftschnur (702), wodurch ein Auslösestift (714), der an einem Ende der Auslösestiftschnur (702) befestigt ist, aus einer Verschlussschlaufe (712) herausgleitet;
Aktivieren einer Ösenbewegungsleine (718), die in einer geschlossenen Schleife durch eine Öse (716) eines ersten Gurtbandes angeordnet ist, durch Eingriff mit dem Auslösestift (714);
Bewegen der Öse (716) von der Verschlussschlaufe (712) und einem ersten Ring (706), der an dem ersten Gurtband (704) an einem ersten Gurtbandbefestigungsabschnitt befestigt ist, weg durch Wirkung der Ösenbewegungsleine (718);
Freigeben des ersten Rings (706), indem dem ersten Ring (706) ermöglicht wird, sich zu einem zweiten Ring (708) hin zu drehen und sich von diesem zu lösen; und
Freigeben des zweiten Rings (708), sobald der erste Ring (706) gelöst ist, und Ermöglichen, dass sich der zweite Ring (708) zu einem dritten Ring (710) hin dreht und sich von diesem löst, wobei der dritte Ring (710) an einem zweiten Gurtband angeordnet ist.

6. Ringfreigabesystem (700, 900, 1200) für ein Fallschirm-Rückhaltesystem, aufweisend:
ein erstes Gurtband (704);
ein zweites Gurtband;
eine Verschlussschlaufe (712);
einen ersten Ring (706), der mit dem ersten Gurtband (704) an einem ersten Gurtbandbefestigungsabschnitt verbunden ist;
einen zweiten Ring (708), der mit dem ersten Gurtband (704) an einem zweiten Gurtbandbefestigungsabschnitt verbunden ist;
einen dritten Ring (710), der mit dem zweiten Gurtband an einem dritten Gurtbandbefestigungsabschnitt verbunden ist;
eine Auslösestiftanordnung, aufweisend eine Auslösestiftschnur (702) und einen Auslösestift (714), der durch die Verschlussschlaufe (712) verläuft, die durch eine Öse (716) in dem ersten Gurtband (704) angeordnet ist, die den ersten Ring (706) zumindest teilweise überlappt und den Auslösestift (714) lösbar in der Öse (716) sichert; und
**gekennzeichnet durch**
eine erste Ring- und/oder Gurtbandschlaufebewegungsleine (904, 1202), die mit einem ersten Ende der Auslösestiftschnur (702) verbunden ist und mit dem ersten Gurtband (704) zwischen dem ersten Gurtbandbefestigungsabschnitt und dem zweiten Gurtbandbefestigungsabschnitt verbunden ist und mit dem Auslösestift (714) während einer Spannung der Auslösestiftschnur (702) in Eingriff bringbar ist.

7. Ringfreigabesystem (700, 900, 1200) nach Anspruch 6, des Weiteren aufweisend eine zweite Ring- und/oder Gurtbandschlaufebewegungsleine (1204), die mit dem ersten Ende der Auslösestiftschnur (702) verbunden ist und mit dem ersten Gurtband (704) nahe dem zweiten Gurtbandbefestigungsabschnitt verbunden ist und mit dem Auslösestift (714) während einer Spannung der Auslösestiftschnur (702) in Eingriff bringbar ist.

8. Ringfreigabesystem (700, 900, 1200) nach Anspruch 6 oder 7, des Weiteren aufweisend eine Ösenbewegungsleine (718), die in einer geschlossenen Schleife durch die Öse (716) angeordnet ist und mit dem Auslösestift (714) während einer Spannung der Auslösestiftschnur (702) in Eingriff bringbar ist.

9. Ringfreigabesystem (700, 900, 1200) nach Anspruch 8, wobei die zweite Ring- und/oder Gurtbandschlaufebewegungsleine (1204) länger ist als die erste Ring- und/oder Gurtbandschlaufebewegungsleine (904, 1202).

10. Verfahren zum Lösen eines Ringfreigabesystems (700, 900, 1200) für ein Fallschirm-Rückhaltesystem, wobei das Verfahren aufweist:
Aufbringen einer Spannung auf eine Auslösestiftschnur (702), wodurch ein Auslösestift (714), der an einem Ende der Auslösestiftschnur (702) befestigt ist, aus einer Verschlussschlaufe (712) herausgleitet;
Aktivieren einer ersten Ring- und/oder Gurtbandschlaufebewegungsleine (904, 1202), die mit der Auslösestiftschnur (702) verbunden ist;
Freigeben eines ersten Rings (706), indem dem ersten Ring (706) ermöglicht wird, sich zu einem zweiten Ring (708) hin zu drehen und sich von diesem zu lösen durch Aktivierung der ersten Ring- und/oder Gurtbandschlaufebewegungsleine (904, 1202); und
Freigeben des zweiten Rings (708), sobald der erste Ring (706) gelöst ist, und Ermöglichen, dass sich der zweite Ring (708) zu einem dritten Ring (710) hin dreht und sich von diesem löst, wobei der dritte Ring (710) an einem zweiten Gurtband angeordnet ist.

11. Verfahren nach Anspruch 10, wobei nach dem Freigeben des ersten Rings (706) das Verfahren des Weiteren aufweist:
Aktivieren einer zweiten Ring- und/oder Gurtbandschlaufebewegungsleine (1204), die mit der Auslösestiftschnur (702) verbunden ist, wobei der zweite Ring (708) durch Aktivierung der zweiten Ring- und/oder Gurtbandschlaufebewegungsleine (1204) freigegeben wird.

12. Verfahren nach Anspruch 10, wobei der erste Ring und der zweite Ring an einem ersten Gurtband angeordnet sind und der dritte Ring an einem zweiten Gurtband angeordnet ist.

13. Verfahren nach Anspruch 5 oder einem der Ansprüche 10 bis 12, wobei das erste Gurtband und das zweite Gurtband an einem Fallschirm-Rückhaltesystem befestigt sind.

14. Ringfreigabesystem (700, 900, 1200) für ein Fallschirm-Rückhaltesystem, aufweisend:
ein erstes Gurtband (704);
ein zweites Gurtband;
eine Verschlussschlaufe (712);
einen ersten Ring (706), der mit dem ersten Gurtband (704) an einem ersten Gurtbandbefestigungsabschnitt verbunden ist;
einen zweiten Ring (708), der mit dem ersten Gurtband (704) an einem zweiten Gurtbandbefestigungsabschnitt verbunden ist;
einen dritten Ring (710), der mit dem zweiten Gurtband an einem dritten Gurtbandbefestigungsabschnitt verbunden ist;
eine Auslösestiftanordnung, aufweisend eine Auslösestiftschnur und einen Auslösestift, der durch die Verschlussschlaufe (712) verläuft, die durch eine Öse (716) in dem ersten Gurtband (704) angeordnet ist, die den ersten Ring (706) zumindest teilweise überlappt und den Auslösestift (714) lösbar in der Öse (716) sichert;
**gekennzeichnet durch**
eine Ösenbewegungsleine, die in einer geschlossenen Schleife durch die Öse (716) angeordnet ist und mit dem Auslösestift (714) während einer Spannung der Auslösestiftschnur (702) in Eingriff bringbar ist;
eine erste Ring- und/oder Gurtbandschlaufebewegungsleine (904, 1202), die mit einem ersten Ende der Auslösestiftschnur (702) verbunden ist und mit dem ersten Gurtband (704) zwischen dem ersten Gurtbandbefestigungsabschnitt und dem zweiten Gurtbandbefestigungsabschnitt verbunden ist und mit dem Auslösestift (714) während einer Spannung der Auslösestiftschnur (702) in Eingriff bringbar ist; und
eine zweite Ring- und/oder Gurtbandschlaufebewegungsleine (1204), die mit dem ersten Ende der Auslösestiftschnur (702) verbunden ist und mit dem ersten Gurtband (704) nahe dem zweiten Gurtbandbefestigungsabschnitt verbunden ist und mit dem Auslösestift (714) während einer Spannung der Auslösestiftschnur (702) in Eingriff bringbar ist.

15. Fallschirm-Rückhaltesystem, aufweisend ein Ringfreigabesystem nach einem der Ansprüche 1 bis 4, 6 bis 9 oder Anspruch 14, wobei der erste Gurtbandbefestigungsabschnitt, der zweite Gurtbandbefestigungsabschnitt und der dritte Gurtbandbefestigungsabschnitt an dem Fallschirm-Rückhaltesystem befestigt sind.

## Revendications

1. Système de libération à anneaux (700) pour un système de retenue de parachute, comprenant :
une première sangle (704) ;
une seconde sangle ;
une boucle de fermeture (712) ;
un premier anneau (706) relié à la première sangle (704) au niveau d'une première partie de fixation de sangle ;
un deuxième anneau (708) relié à la première sangle (704) au niveau d'une deuxième partie de fixation de sangle ;
un troisième anneau (710) relié à la seconde sangle au niveau d'une troisième partie de fixation de sangle ;
un ensemble goupille de libération (714) comprenant un cordon de goupille de libération (702) et une goupille de libération (714) qui passe à travers la boucle de fermeture (712) qui est agencée à travers un œillet (716) dans la première sangle (704) qui chevauche au moins partiellement le premier anneau (706) et maintient de manière amovible la goupille de libération (714) dans l'œillet (716) ; et
**caractérisé par**
un cordon de mouvement d'œillet (718) agencé en boucle fermée à travers l'œillet (714) et pouvant venir en prise avec la goupille de libération (714) pendant une tension du cordon de goupille de libération (702).

2. Système de libération à anneaux (700) selon la revendication 1, dans lequel le cordon de mouvement d'œillet (718) est agencé pour provoquer l'application d'une force sur une partie de la première sangle (704) et/ou l'œillet (716) qui amène l'œillet (716) à être tiré loin de la boucle de fermeture (712) et du premier anneau (706) pendant la mise en prise avec le cordon de goupille de libération (702).

3. Système de libération à anneaux (700) selon la revendication 2, dans lequel le premier anneau (706) est libéré par le déplacement de l'œillet (716) fourni par le cordon de mouvement d'œillet (718).

4. Système de libération à anneaux (700) selon l'une quelconque des revendications 1 à 3, dans lequel la première partie de fixation de sangle est une première boucle de sangle (218), la deuxième partie de fixation de sangle est une deuxième boucle de sangle (220), et la troisième partie de fixation de sangle est une troisième boucle de sangle (222).

5. Procédé de désolidarisation d'un système de libération à anneaux (700) pour un système de retenue de parachute, le procédé comprenant :
la fourniture d'une tension à un cordon de goupille de libération (702) amenant une goupille de libération (714) qui est fixée à une extrémité du cordon de goupille de libération (702) à glisser hors d'une boucle de fermeture (712) ;
l'activation d'un cordon de mouvement d'œillet (718) qui est agencé en boucle fermée à travers un œillet (716) d'une première sangle par la mise en prise avec la goupille de libération (714) ;
l'éloignement de l'œillet (716) de la boucle de fermeture (712) et d'un premier anneau (706) qui est fixé à la première sangle (704) au niveau d'une première partie de fixation de sangle par l'action du cordon de mouvement d'œillet (718) ;
la libération du premier anneau (706) en permettant au premier anneau (706) de tourner vers un deuxième anneau (708) et de se désolidariser de celui-ci ; et
la libération du deuxième anneau (708) une fois que le premier anneau (706) est désolidarisé et le fait de permettre au deuxième anneau (708) de tourner vers un troisième anneau (710) et de se désolidariser de celui-ci, dans lequel le troisième anneau (710) est agencé sur une seconde sangle.

6. Système de libération à anneaux (700, 900, 1200) pour un système de retenue de parachute, comprenant :
une première sangle (704) ;
une seconde sangle ;
une boucle de fermeture (712) ;
un premier anneau (706) relié à la première sangle (704) au niveau d'une première partie de fixation de sangle ;
un deuxième anneau (708) relié à la première sangle (704) au niveau d'une deuxième partie de fixation de sangle ;
un troisième anneau (710) relié à la seconde sangle au niveau d'une troisième partie de fixation de sangle ;
un ensemble goupille de libération comprenant un cordon de goupille de libération (702) et une goupille de libération (714) qui passe à travers la boucle de fermeture (712) qui est agencée à travers un œillet (716) dans la première sangle (704) qui chevauche au moins partiellement le premier anneau (706) et maintient de manière amovible la goupille de libération (714) dans l'œillet (716) ; et
**caractérisé par**
un cordon de mouvement de premier anneau et/ou de boucle de sangle (904, 1202) relié à une première extrémité du cordon de goupille de libération (702) et relié à la première sangle (704) entre la première partie de fixation de sangle et la deuxième partie de fixation de sangle et pouvant venir en prise avec la goupille de libération (714) pendant une tension du cordon de goupille de libération (702).

7. Système de libération à anneaux (700, 900, 1200) selon la revendication 6, comprenant en outre un cordon de mouvement de deuxième anneau et/ou boucle de sangle (1204) relié à la première extrémité du cordon de goupille de libération (702) et relié à la première sangle (704) à proximité de de la deuxième partie de fixation de sangle et pouvant venir en prise avec la goupille de libération (714) pendant une tension du cordon de goupille de libération (702).

8. Système de libération à anneaux (700, 900, 1200) selon la revendication 6 ou 7, comprenant en outre un cordon de mouvement d'œillet (718) agencé en boucle fermée à travers l'œillet (716) et pouvant venir en prise avec la goupille de libération (714) pendant une tension du cordon de goupille de libération (702).

9. Système de libération à anneaux (700, 900, 1200) selon la revendication 8, dans lequel le cordon de mouvement de deuxième anneau et/ou boucle de sangle (1204) est plus long que le cordon de mouvement de premier anneau et/ou première boucle de sangle (904, 1202).

10. Procédé de désolidarisation d'un système de libération à anneaux (700, 900, 1200) pour un système de retenue de parachute, le procédé comprenant :
la fourniture d'une tension à un cordon de goupille de libération (702) amenant une goupille de libération (714) qui est fixée à une extrémité du cordon de goupille de libération (702) à glisser hors d'une boucle de fermeture (712) ;
l'activation d'un cordon de mouvement de premier anneau et/ou première boucle de sangle (904, 1202) qui est relié au cordon de goupille de libération (702) ;
la libération d'un premier anneau (706) en permettant au premier anneau (706) de tourner vers un deuxième anneau (708) et de se désolidariser de celui-ci par l'activation du cordon de mouvement de premier anneau et/ou première boucle de sangle (904, 1202) ; et
la libération du deuxième anneau (708) une fois que le premier anneau (706) est désolidarisé et le fait de permettre au deuxième anneau (708) de tourner vers un troisième anneau (710) et de se désolidariser de celui-ci, dans lequel le troisième anneau est agencé sur une seconde sangle.

11. Procédé selon la revendication 10, dans lequel après la libération du premier anneau (706), le procédé comprend en outre :
l'activation d'un cordon de mouvement de deuxième anneau et/ou boucle de sangle (1204) qui est relié au cordon de goupille de libération (702), dans lequel le deuxième anneau (708) est libéré par l'activation du cordon de mouvement de deuxième anneau et/ou boucle de sangle (1204).

12. Procédé selon la revendication 10, dans lequel le premier anneau et le deuxième anneau sont agencés sur une première sangle et le troisième anneau est agencé sur une seconde sangle.

13. Procédé selon la revendication 5 ou l'une quelconque des revendications 10 à 12, dans lequel la première sangle et la seconde sangle sont fixées à un système de retenue de parachute.

14. Système de libération à anneaux (700, 900, 1200) pour un système de retenue de parachute, comprenant :
une première sangle (704) ;
une seconde sangle ;
une boucle de fermeture (712) ;
un premier anneau (706) relié à la première sangle (704) au niveau d'une première partie de fixation de sangle ;
un deuxième anneau (708) relié à la première sangle (704) au niveau d'une deuxième partie de fixation de sangle ;
un troisième anneau (710) relié à la seconde sangle au niveau d'une troisième partie de fixation de sangle ;
un ensemble goupille de libération comprenant un cordon de goupille de libération et une goupille de libération qui passe à travers la boucle de fermeture (712) qui est agencée à travers un œillet (716) dans la première sangle (704) qui chevauche au moins partiellement le premier anneau (706) et maintient de manière amovible la goupille de libération (714) dans l'œillet (716) ;
**caractérisé par**
un cordon de mouvement d'œillet agencé (718) en boucle fermée à travers l'œillet (716) et pouvant venir en prise avec la goupille de libération (714) pendant une tension du cordon de goupille de libération (702) ;
un cordon de mouvement de premier anneau et/ou première boucle de sangle (904, 1202) relié à une première extrémité du cordon de goupille de libération (702) et relié à la première sangle (704) entre la première partie de fixation de sangle et la seconde partie de fixation de sangle et pouvant venir en prise avec la goupille de libération (714) pendant une tension du cordon de goupille de libération (702) ; et
un cordon de mouvement de deuxième anneau et/ou boucle de sangle (1204) relié à la première extrémité du cordon de goupille de libération (702) et relié à la première sangle (704) à proximité de la deuxième partie de fixation de sangle et pouvant venir en prise avec la goupille de libération (714) pendant une tension du cordon de goupille de libération (702).

15. Système de retenue de parachute comprenant un système de libération à anneaux selon l'une quelconque des revendications 1 à 4, 6 à 9 ou la revendication 14, dans lequel la première partie de fixation de sangle, la deuxième partie de fixation de sangle et la troisième partie de fixation de sangle sont fixées au système de retenue de parachute.
